(19) Europäisches Patentamt
European Patent Office
Office européen des brevets

(11) **EP 4 517 402 A1**

(12) **EUROPEAN PATENT APPLICATION**
published in accordance with Art. 153(4) EPC

(43) Date of publication:
05.03.2025 Bulletin 2025/10

(51) International Patent Classification (IPC):
G02B 7/10 (2021.01)        G02B 7/28 (2021.01)
G02B 7/04 (2021.01)        H04N 23/67 (2023.01)

(21) Application number: 23794858.3

(22) Date of filing: 20.03.2023

(86) International application number:
PCT/CN2023/082575

(87) International publication number:
WO 2023/207423 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.04.2022 CN 202210450222

(71) Applicant: Hangzhou Hikvision Digital
Technology Co., Ltd.
Hangzhou, Zhejiang 310051 (CN)

(72) Inventors:
• REN, Jian
  Hangzhou, Zhejiang 310051 (CN)
• GONG, Qi
  Hangzhou, Zhejiang 310051 (CN)
• MA, Weimin
  Hangzhou, Zhejiang 310051 (CN)

(74) Representative: Epping - Hermann - Fischer
Patentanwaltsgesellschaft mbH
Schloßschmidstraße 5
80639 München (DE)

(54) **CAMERA ELECTRIC MOTOR DRIVING METHOD BASED ON TRM SENSOR**

(57) The present application relates to the technical field of security monitoring and camera lenses. Disclosed is a camera electric motor driving method based on a TRM sensor, by means of which method a zooming operation and/or a focusing operation of an optical camera lens can be implemented in a short time. The method comprises: acquiring a first parameter value, at a first moment, of a target electrical signal which is generated by a TMR sensor, wherein the first parameter value is used for representing a ratio between two-phase signals of the target electrical signal; determining a target angle of the target electrical signal at the first moment according to the correlation between a plurality of first parameter values of the target electrical signal and a plurality of angles of the target electrical signal in a single cycle, and the first parameter value of the target electrical signal at the first moment, wherein the first parameter values correspond to the angles on a one-to-one basis; determining the current position of a lens group at the current moment at least based on the target angle; generating a driving signal based on the current position of the lens group and a target position of the lens group; and driving a voice coil electric motor by using the driving signal, such that the lens group is adjusted from the current position to the target position.

obtaining a first parameter value, at a first moment, of a target electrical signal generated by a TMR sensor — S101

determining a target angle of the target electrical signal at the first moment according to the first parameter value of the target electrical signal at the first moment and a correspondence between multiple first parameter values of the target electrical signal and multiple angles of the target electrical signal in a single cycle — S102

determining a current position of a lens group at a current moment at least based on the target angle — S103

generating a driving signal based on the current position of the lens group and a target position of the lens group — S104

driving a voice coil motor by using the driving signal such that the lens group is adjusted from the current position to the target position — S105

Fig.5

## Description

The present application claims the priority to a Chinese patent application 202210450222.8 filed with the China National Intellectual Property Administration (CNIPA) on April 26, 2022 and entitled "DRIVING METHOD AND APPARATUS", which is incorporated herein by reference in its entirety.

## Technical Field

The application relates to technical field of security monitoring and camera lenses, and in particular to a camera electric motor driving method based on a TRM sensor.

## Background

A zooming process of a traditional optical zoom camera lens from a minimum magnification to a maximum magnification usually takes about 2 seconds to 10 seconds, and a focusing action after the zooming process takes about 1 second to 3 seconds. In other words, the traditional optical zoom camera lens cannot complete the zooming and focusing actions in a short time. Therefore, for a fast-moving object, it is impossible to shoot the fast-moving object by using such an optical zoom camera lens.

When a shooting task is for the fast-moving object, for example, the shooting task is to shoot whether a driver of a moving vehicle is using a mobile phone, since the traditional optical zoom camera lens cannot complete the zooming and focusing actions in a short time, when dealing with such task, it is usually necessary to shoot a large-scale image firstly, and then use digital zoom cutout technology to cut out an interest area in the obtained large-scale image, such as cut out an area that can represent the driver's hand movement in the above task, and perform an image behavior analysis on the area to obtain a shooting result. However, since the number of image pixels obtained by cutting out the interest area is small, which greatly reduces the image quality, this method has high difficulty and low success rate in post image analysis.

Therefore, there is an urgent need for a fast zooming and focusing solution that can implement the zooming and/or focusing action of the optical camera lens in a short time.

## Summary

The present application provides a camera electric motor driving method based on a TRM sensor to increase the speed of optical camera lens zooming and/or focusing.

In a first aspect, the present application provides a driving method for driving a camera lens, wherein the camera includes a lens group, a voice coil motor and a tunnel magneto resistance TMR sensor which are connected to the lens group respectively, wherein the voice coil motor is configured to control a movement of the lens group; and the TMR sensor is configured to generate an electrical signal during the movement of the lens group; the method includes:

obtaining a first parameter value, at a first moment, of a target electrical signal generated by the TMR sensor; wherein the target electrical signal is an electrical signal generated by the TMR sensor between the first moment and a current moment; the first moment is before the current moment, and the first parameter value is configured to represent a ratio between two-phase signals of the target electrical signal;

determining a target angle of the target electrical signal at the first moment according to the first parameter value of the target electrical signal at the first moment and a correspondence between multiple first parameter values of the target electrical signal and multiple angles of the target electrical signal in a single cycle; wherein the first parameter values correspond one-to-one to the angles;

determining a current position of the lens group at the current moment at least based on the target angle;

generating a driving signal based on the current position of the lens group and a target position of the lens group;

driving the voice coil motor by using the driving signal, such that the lens group is adjusted from the current position to the target position.

In the camera electric motor driving method based on the TRM sensor provided by the present application, the first parameter value of the target electrical signal generated by the TMR sensor is obtained at the first moment, and the target angle of the target electrical signal at the first moment is determined according to the correspondence between the first parameter values and the angles; then the current position of the lens group is determined based on the target angle, and the driving signal is generated according to the target position and the current position, such that the voice coil motor drives the lens group to adjust from the current position to the target position according to the driving signal. It can be understood that in the process of determining the driving signal, if the single-chip microcomputer needs to calculate the target angle in real time, which will consume a lot of time and calculating resources. Therefore, based on the method provided by the embodiment of the present application, the target angle can be determined according to the correspondence between the first parameter values and the angles, the target angle does not need to be calculated in real time, the current position of the lens group can be quickly determined, and then the driving signal is generated according to the current position of the lens group and the target position of the lens group. When the method provided by the embodiment of the present application is applied to the camera lens, the zooming rate and focusing rate of the camera lens can be increased, and thus the zooming action and/or focusing action of the camera lens can be realized in a short time.

Of course, it is not necessary for any product or method implementing the present application to achieve all the advantages described above simultaneously.

**Brief Description of the Drawings**

In order to more clearly describe the technical solutions of the embodiments of the present application or the prior art, accompanying drawings that need to be used in the embodiments or the prior art will be briefly described below. Obviously, the accompanying drawings described below are for only some of the embodiments of the present application. For those skilled in the art, further embodiments may be also obtained based on these accompanying drawings.

Fig. 1 is a first structural schematic diagram of a camera provided by an embodiment of the present application;

Fig. 2 is a second structural schematic diagram of a camera provided by an embodiment of the present application;

Fig. 3 is a structural schematic diagram of a control apparatus provided by an embodiment of the present application;

Fig. 4 is a schematic diagram of a signal processing flow provided by an embodiment of the present application;

Fig. 5 is a first schematic flowchart of a driving method provided by an embodiment of the present application;

Fig. 6 is a schematic diagram of a TMR sensor provided by an embodiment of the present application;

Fig. 7 is a first schematic diagram of an electrical signal provided by an embodiment of the present application;

Fig. 8 is a second schematic diagram of an electrical signal provided by an embodiment of the present application;

Fig. 9 is a second flowchart of a driving method provided by an embodiment of the present application;

Fig. 10 is a third flowchart of a driving method provided by an embodiment of the present application;

Fig. 11 is a schematic diagram of a motion cycle of a lens group provided by an embodiment of the present application;

Fig. 12 is a fourth flowchart of a driving method provided by an embodiment of the present application;

Fig. 13 is a schematic diagram of a linear signal provided by an embodiment of the present application;

Fig. 14 is a schematic diagram of an inverse tangent function provided by an embodiment of the present application;

Fig. 15 is a schematic diagram of a tangent value provided by an embodiment of the present application;

Fig. 16 is a fifth flowchart of a driving method provided by an embodiment of the present application;

Fig. 17 is a schematic diagram of cycle counting of an electrical signal provided by an embodiment of the present application;

Fig. 18 is a first structural schematic diagram of a driving apparatus provided by an embodiment of the present application;

Fig. 19 is a second structural schematic diagram of a driving apparatus provided by an embodiment of the present application.

**Detailed Description**

The technical solutions in the embodiments of the present application will be clearly and completely described below with reference to the accompanying drawings in the embodiments of the present application. Obviously, the described embodiments are only some, and not all, of the embodiments of the present application. All other embodiments obtained by those skilled in the art based on the embodiments of the present application fall into the scope of protection of the present application.

Term "and/or" herein is merely a description of an association relationship of associated objects, representing that three relationships may exist. For example, A and/or B can represent three situations: A exists alone, A and B exist at the same time, and B exists alone.

Terms such as "first" and "second" in the description and drawings of the present application are used to distinguish different objects, or to distinguish different processing of the same object, rather than to describe a specific order of the objects.

Moreover, terms "including" and "having" and any variations thereof mentioned in the description of the present application are intended to encompass non-exclusive inclusion. For example, a process, method, system, product or device that includes a series of steps or units is not limited to the listed steps or units, but specifically includes further steps or units that are not listed, or specifically includes further steps or units that are inherent in such a process, method, system, product or device.

It should be noted that, in the embodiments of the present application, words such as "in one example" or "for example" are used to represent an example, illustration or explanation. Any embodiment or design described as "in one example" or "for example" in the embodiments of the present application should not be explained as being more preferred or more advantageous than other embodiments or designs. Specifically, the use of words such as "in one example" or "for example" is intended to present related concepts in a specific way.

In the description of the present application, "multiple" refers to two or more unless otherwise specified.

Since the zoom action and/or focusing action of the optical zoom camera lens in the related art is slow, it is impossible to monitor and shoot a fast-moving object. In order to solve this problem, the present application provides a driving method and apparatus, which are described in detail through specific embodiments below.

Firstly, a camera provided by an embodiment of the present application is described in detail.

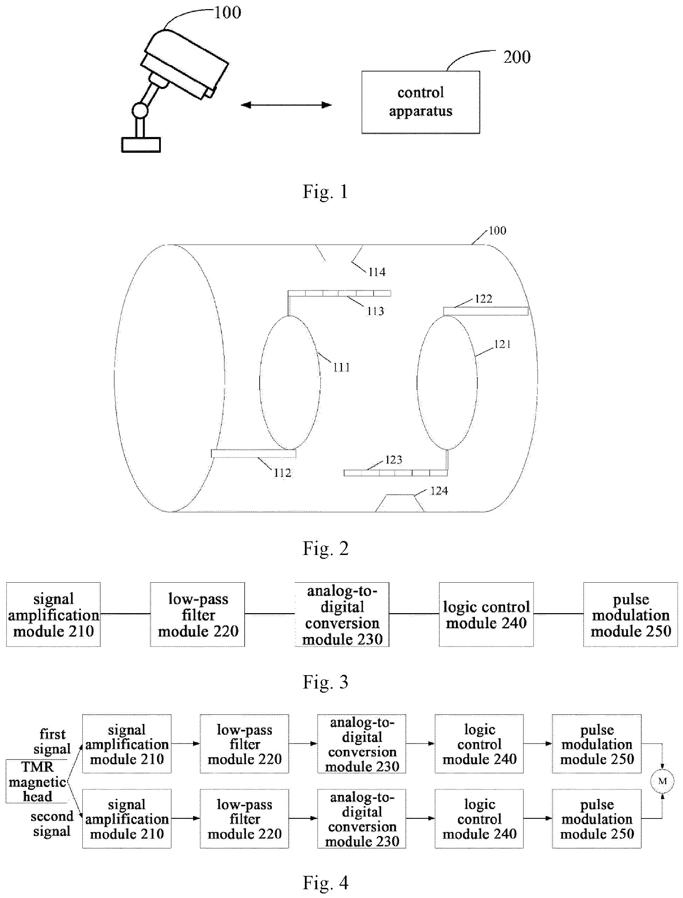

Referring to Fig. 1, Fig. 1 shows a structural schematic diagram of a camera provided by an embodiment of the present application. The camera includes a camera lens 100 and a control apparatus 200. The camera lens 100 and the control apparatus 200 can be arranged independently or integrally. The camera lens 100 and the control apparatus 200 arranged independently are exemplarily described below.

The camera lens 100 includes a zoom group and a focus group.

As shown in Fig. 2, the zoom group includes a zoom lens group 111, a zoom voice coil motor 112, a zoom tunnel magneto resistance (TMR) magnetic strip 113, and a zoom TMR magnetic head 114.

The zoom voice coil motor 112 is configured to drive the zoom lens group 111 to move in a direction of a camera lens optical axis.

The zoom TMR magnetic strip 113 is configured to generate a multi-cycle magnetic field.

The zoom TMR magnetic head 114 is fixed on a housing of the camera lens 100, and the zoom TMR magnetic head 114 is arranged opposite to the zoom TMR magnetic strip 113. The zoom TMR magnetic head 114 is configured to cut a magnetic field generated by the zoom TMR magnetic strip 113 to generate an electrical signal.

Specifically, the zoom lens group 111 is fixedly connected (hard-connected) to the zoom TMR magnetic strip 113. When the zoom voice coil motor 112 drives the zoom lens group 111 to move in the direction of the camera lens optical axis, the zoom TMR magnetic strip 113 and the zoom lens group 111 always remain relatively static, and the zoom TMR magnetic strip 113 and the zoom TMR magnetic head 114 are relatively displaced. At this time, the zoom TMR magnetic head 114 cuts the magnetic field generated by the zoom TMR magnetic strip 113, thereby a target electrical signal is generated. The target electrical signal has multiple signal cycles, and a unit moving distance corresponding to each signal cycle is the same.

In one embodiment of the present application, the target electrical signal generated by the zoom TMR magnetic head 114 are two-phase signals with a phase difference of 90 degrees therebetween.

In one embodiment of the present application, the zoom TMR magnetic head 114 is further configured to send the generated target electrical signal to the control apparatus 200.

As shown in Fig. 2, the focus group includes a focus lens group 121, a focus voice coil motor 122, a focus TMR magnetic strip 123, and a focus TMR magnetic head 124.

The focus voice coil motor 122 is configured to drive the focus lens group 121 to move in a direction of a camera lens optical axis.

The focus TMR magnetic strip 123 is configured to generate a multi-cycle magnetic field.

The focus TMR magnetic head 124 is fixed on the housing of the camera lens 100 and the focus TMR magnetic head 124 is arranged opposite to the focus TMR magnetic strip 123. The focus TMR magnetic head 124 is configured to cut a magnetic field generated by the focus TMR magnetic strip 123 to generate an electrical signal.

Specifically, the focus lens group 121 is fixedly connected (hard-connected) to the focus TMR magnetic strip 123. When the focus voice coil motor 122 drives the focus lens group 121 to move in the direction of the camera lens optical axis, the focus TMR magnetic strip 123 and the focus lens group 121 remain relatively static, and the focus TMR magnetic strip 123 and the focus TMR magnetic head 124 are relatively displaced. At this time, the focus TMR magnetic head 124 cuts the magnetic field generated by the focus TMR magnetic strip 123, thereby a target electrical signal is generated. The target electrical signal has multiple signal cycles, and a unit moving distance corresponding to each signal cycle is the same.

In one embodiment of the present application, the target electrical signal generated by the focus TMR magnetic head 124 are two-phase signals with a phase difference of 90 degrees therebetween.

In one embodiment of the present application, the focus TMR magnetic head 124 is further configured to send the generated target electrical signal to the control apparatus 200.

The control apparatus 200 is configured to generate a driving signal for the zoom voice coil motor 112 according to the target electrical signal sent by the zoom TMR magnetic head 114, to drive the zoom voice coil motor 112 to operate.

The control apparatus 200 is further configured to generate a driving signal for the focus voice coil motor 122 according to the target electrical signal sent by the focus TMR magnetic head 124, to drive the focus voice coil motor 122 to operate.

In one embodiment of the present application, as shown in Fig. 3, the control apparatus 200 may include one or more modules of a signal amplification module 210, a low-pass filter module 220, an analog-to-digital conversion module 230, a logic control module 240 and a pulse modulation module 250.

The signal amplification module 210 is configured to amplify the electrical signal. It can be understood that since the target electrical signal generated by the TMR magnetic head is relatively weak, in order to ensure that the target electrical signal subsequently transmitted to the logic control module 240 through a wire for processing is effective, the target electrical signal needs to be amplified by the signal amplification module 210 firstly.

The low-pass filter module 220 is configured to filter out noise in the electrical signal. It can be understood that since the signal amplification module 210 amplifies the noise signal in the target electrical signal while amplifying the original target electrical signal, the amplified target electrical signal needs to be corrected by the low-pass filter module 220 to remove the noise signal.

The analog-to-digital conversion module 230 is configured to convert the electrical signal from an analog signal to a digital signal.

The logic control module 240 is configured to process the electrical signal to obtain the driving signal for the voice coil motor.

In one example, the driving signal is a pulse width modulation (PWM) signal.

The pulse modulation module 250 is configured to drive the voice coil motor to operate according to the driving signal.

In one embodiment of the present application, the target electrical signal generated by the TMR magnetic head can be two-phase signals which are respectively a first signal and a second signal. As shown in Fig. 4, the two-phase signals are simultaneously input into the control apparatus 200, and are processed in sequence by the signal amplification module 210, the low-pass filter module 220, the analog-to-digital conversion module 230, the logic control module 240 and the pulse modulation module 250, and finally the driving signal is generated to drive the voice coil motor (M) to operate.

In one embodiment of the present application, the phase difference between the first signal and the second signal is 90 degrees.

In one embodiment of the present application, a waveform of the first signal is a waveform meeting a sine signal, and a waveform of the second signal is a waveform meeting a cosine signal.

In one embodiment of the present application, the control apparatus 200 is further configured to determine a current position of the lens group at a current moment based on the phase difference and the number of signal cycles of the target electrical signal.

In one embodiment of the present application, the current position of the lens group at the current moment is determined by a ratio between the first signal and the second signal. In one example, the current position of the lens group at the current moment is determined by a function with the number of the signal cycles of the target electrical signal and the ratio between the first signal and the second signal as parameter variables. The specifics will be described in detail in Step S103 of method embodiments below.

In one embodiment of the present application, the control apparatus 200 further includes a memory storing arc tangent values of multiple angles therein. The control apparatus 200 is specifically configured to address a target arc tangent value in the memory according to the ratio, and determine the current position of the lens group at the current moment according to the target arc tangent value, the number of the signal cycles of the target electrical signal, and the unit moving distance. The specifics will be described in detail in Steps S102-S103 of the method embodiments below.

It can be understood that the control apparatus 200 does not need to calculate the target arc tangent value in real time, and can determine the target arc tangent value by addressing, such that the time required for the control apparatus 200 to determine the current position of the lens group at the current moment is short, that is, the driving signal can be generated quickly, thereby increasing the zooming rate and/or focusing rate of the camera.

**In** one embodiment of the present application, the control apparatus 200 is specifically configured to determine a target angle according to the target arc tangent value and a positive-negative relationship between a voltage value of the first signal and a voltage value of the second signal; determine a position of the lens group in a single cycle according to the target angle; determine the current position of the lens group at the current moment according to the position of the lens group in the single cycle, the number of the signal cycles of the target electrical signal, and the unit moving distance. The specifics will be described in detail in Steps S203-S206 of the method embodiments below.

**In** one embodiment of the present application, the control apparatus 200 is specifically configured to determine that the target angle is equal to the target arc tangent value, when the voltage value of the first signal is greater than or equal to zero, and the voltage value of the second signal is greater than zero; determine that the target angle is a difference between 180 degree and the target arc tangent value, when the voltage value of the first signal is less than zero, and the voltage value of the second signal is greater than or equal to zero; determine that the target angle is a sum of 180 degree and the target arc tangent value, when the voltage value of the first signal is less than or equal to zero, and the voltage value of the second signal is less than zero; determine that the target angle is a difference between 360 degree and the target arc tangent value, when the voltage value of the first signal is greater than zero, and the voltage value of the second signal is less than zero. Specifically, please refer to Step S203 below.

In one embodiment of the present application, the control apparatus 200 is specifically configured to obtain an absolute value of the voltage value of the first signal and an absolute value of the voltage value of the second signal; and determine the target arc tangent value according to a relationship between the absolute value of the voltage value of the first signal and the absolute value of the voltage value of the second signal.

When the absolute value of the voltage value of the first signal is greater than the absolute value of the voltage value of the second signal, the ratio is a ratio of the absolute value of the voltage value of the second signal to the absolute value of the voltage value of the first signal, and the target arc tangent value addressed in the memory according to the ratio is the arc tangent value of the ratio; when the absolute value of the voltage value of the first signal is less than or equal to the absolute value of the voltage value of the second signal, the ratio is a ratio of the absolute value of the voltage value of the first signal to the absolute value of the voltage value of the second signal, and the target arc tangent value addressed in the memory according to the ratio is a difference between 90 degree and the arc tangent value of the ratio.

The specifics will be described in detail in Step S203 of the method embodiments below.

In one embodiment of the present application, the control apparatus 200 is further configured to generate the driving signal based on the current position of the lens group and a target position of the lens group. The specifics will be described in detail in Step S104 of the method embodiments below.

The time difference between two adjacent driving signals generated by the control apparatus 200 is less than or equal to a preset threshold.

It can be understood that the time difference between the two adjacent driving signals generated by the control apparatus 200 being less than or equal to the preset threshold means that the voice coil motor can receive the driving signal in time, such that the voice coil motor drives the lens group to move faster, thereby increasing zooming rate and/or focusing rate of the camera.

In one embodiment of the present application, the control apparatus 200 is further configured to drive the voice coil motor by using the driving signal, such that the lens group is adjusted from the current position to the target position. The specifics will be described in detail in Step S105 of the method embodiments below.

It can be understood that the embodiments of the present application apply the voice coil motor to the camera, which solves the problem of a slow zoom or focus speed of a traditional camera driven by a stepping motor. Compared to the stepper motor, the voice coil motor can increase speed by ten times. Furthermore, the present application further introduces a TMR sensor to detect the real-time position as feedback to achieve precise closed-loop control. Furthermore, the camera provided by the embodiments of the present application does not need to calculate the target angle in real time, but obtains the arc tangent value corresponding to the target angle by addressing, and then determines the target angle, which can quickly determine the current position of the lens group, and then generate the drive signal according to the current position of the lens group and the target position of the lens group to drive the camera lens to zoom and/or focus.

Therefore, the camera provided by the embodiments of the present application can realize the zoom action and/or focusing action of the camera lens in a short time, thereby quickly completing shooting and other actions.

The driving method provided by the embodiments of the present application is described in detail below.

The driving method provided by the embodiments of the present application can be performed by the control apparatus shown in Fig. 1. In one example, the driving method provided by the embodiments of the present application can be applied to the zoom group, such that the zoom voice coil motor drives the zoom lens group; in another example, the driving method provided by the embodiments of the present application can also be applied to the focus group, such that the focus voice coil motor drives the focus lens group.

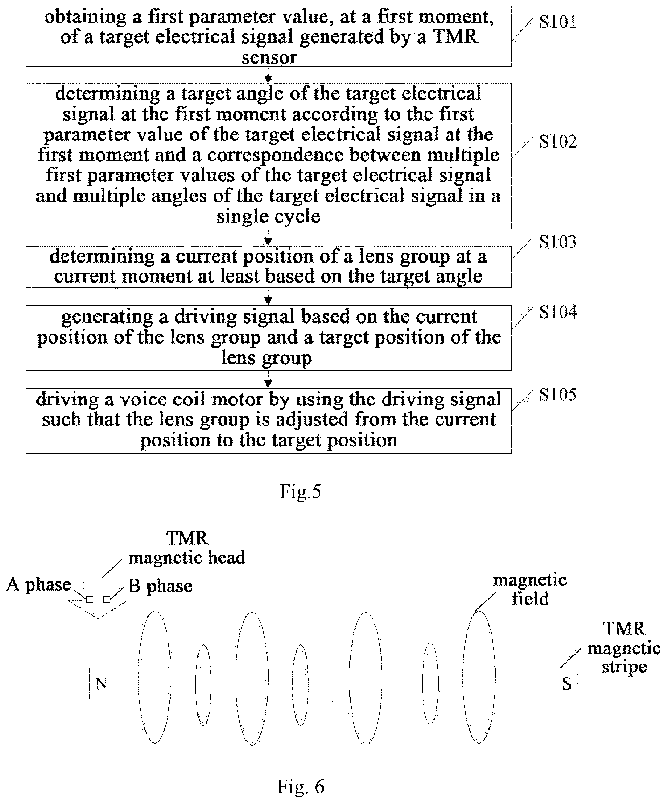

As shown in Fig. 5, an embodiment of the present application provides a flowchart of a driving method, including: Step S101, obtaining a first parameter value, at a first moment, of a target electrical signal generated by a TMR sensor. The target electrical signal is an electrical signal generated by the TMR sensor between the first moment and a current moment. The first moment is before the current moment.

In one embodiment of the present application, the TMR sensor includes a TMR magnetic head and a TMR magnetic strip. Since the TMR magnetic strip is fixedly connected (hard-connected) to the lens group, and the TMR magnetic head is fixed on the camera lens, when the voice coil motor drives the lens group to move, a relative displacement occurs between the TMR magnetic head and the TMR magnetic strip, thereby generating a target electrical signal.

Since the voice coil motor has no holding force, in the absence of a driving signal, the voice coil motor will slide uncontrollably in the direction of gravity, so the driving signal for the voice coil motor cannot be interrupted, that is, the control apparatus needs to calculate and output the driving signal in real time to keep the voice coil motor stably at the target position. In one example, the process of generating the driving signal by the control apparatus (that is, Steps S101-S105) can be looped in one fixed cycle (for example, one loop can be regarded as one motion cycle), and the target position is detected at the beginning of the loop, and then the current position of the voice coil motor is calculated by receiving the target electrical signal output by the TMR magnetic head, and the driving signal is determined according to the difference between the current position and the target position.

If the control apparatus determines that the magnification/focal length does not need to be adjusted in one loop, the target position of the lens group in a next loop is the same as the target position at the end of this loop. If the control apparatus determines that the magnification/focal length needs to be adjusted in the current loop, the target position of the lens in the current loop is a re-determined target position, which is different from a target position at the end of the previous loop. For example, the control apparatus can determine that the magnification/focal length needs to be adjusted according to instructions of the user, or automatically determine that the magnification/focal length needs to be adjusted, such as the magnification/focal length is automatically adjusted based on the shooting scene within the field of view of the camera.

In one example, take the example that the control apparatus determines that the magnification/focal length does not need to be adjusted in one loop: if a first loop (or a first motion cycle) adjusts the voice coil motor from a first current position to a first target position, then after the voice coil motor moves from the first current position to the first target position under the drive of a first drive signal, due to the lack of the drive signal, the voice coil motor slides uncontrollably in the direction of gravity, then at this time, a second loop (or a second motion cycle) will start, the control apparatus determines a second current position of the voice coil motor (the second current position is a position to which the voice coil motor slides in the direction of gravity), and determines a second drive signal based on a difference between the second current position and the first target position (the target position of the previous loop), and then drives the voice coil motor again from the second current position to the first target position according to the second drive signal.

It can be understood that since the voice coil motor is fixedly connected to the lens group, the position of the voice coil motor can simultaneously reflect the position of the lens group.

In one embodiment of the present application, the first moment may be a start moment of the current loop (or the current motion cycle), or an end moment of the previous loop (or the previous motion cycle).

In one embodiment of the present application, the target electrical signal may be two-phase signals. As shown in Fig. 6, the TMR magnetic head has two phases (e.g., phase A and phase B), which respectively convert magnetic field strength at this position into voltage, thereby output the two-phase signals. There is a phase difference between the two phases in the TMR magnetic head, so there is a phase difference between the output two-phase signals. For example, the phase difference between the two phases may be 90 degrees, and the phase difference between the two-phase signals output by the TMR magnetic head may be 90 degrees.

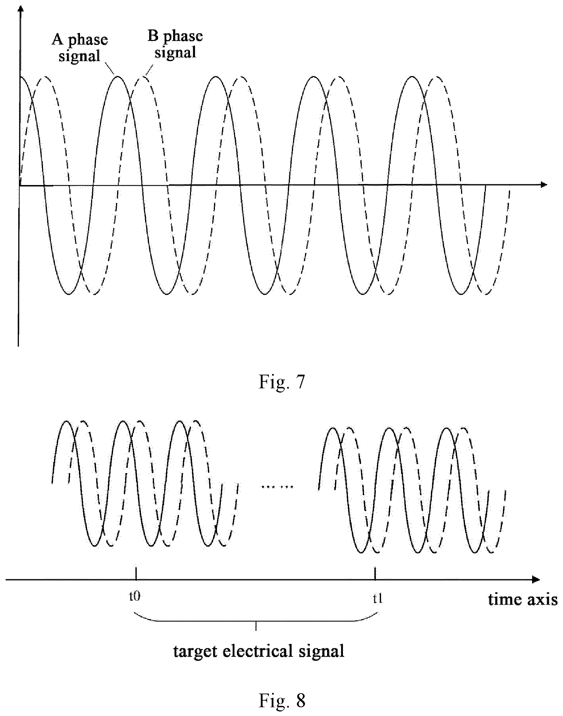

The TMR magnetic head moves from the N pole of the TMR magnetic strip to the S pole of the TMR magnetic strip (relative displacement), which generates an electrical signal with one signal cycle. Since the TMR magnetic strip moves under the drive of the voice coil motor, the TMR magnetic head can output an electrical signal with multiple cycles. In one example, the electrical signal output by the TMR magnetic head can be shown in Fig. 7, wherein the electrical signal is continuous and has multiple signal cycles. The two-phase signals of the electrical signal are: A phase signal and B phase signal, wherein the A phase signal has a waveform that can satisfy a sine signal, and the B phase signal has a waveform that can satisfy a cosine signal.

In one example, as shown in Fig. 8, if the current moment is moment t1, the first moment is moment t0, and the electrical signal generated between moment t0 and moment t1 is the target electrical signal. Specifically, the target electrical signal may include n (n is an integer greater than 0) cycles.

In one embodiment of the present application, the first parameter value is configured to represent a ratio between two-phase signals of the target electrical signal. In one example, the first parameter value can be configured to represent a ratio between voltage values of the two-phase signals of the target electrical signal.

In one embodiment of the present application, the above method further includes performing at least one of amplification processing and filtering processing on the target electrical signal.

It can be understood that since the signal will be lost during transmission along the wire, amplifying the target electrical signal can enable the target electrical signal to be effectively transmitted along the wire. Since the amplification process amplifies the signal while also amplifying the noise in the signal, performing the filtering processing on the amplified target electrical signal can effectively filter out the noise signal in the target electrical signal, thereby obtaining a stable target electrical signal.

In one embodiment of the present application, the method further includes performing analog-to-digital conversion processing on the target electrical signal. In one example, the target electrical signal is input into an analog-to-digital conversion chip to obtain a digital signal of the target electrical signal. The digital signal of the target electrical signal may include discrete voltage values.

It can be understood that the control apparatus provided by the embodiments of the present application may be a single-chip microcomputer chip. Usually, the single-chip microcomputer chip can only process a digital signal, so it is necessary to convert an analog signal into the digital signal.

Step S102, determining a target angle of the target electrical signal at the first moment according to the first parameter value of the target electrical signal at the first moment and a correspondence between multiple first parameter values of the target electrical signal and multiple angles of the target electrical signal in a single cycle.

In one embodiment of the present application, the above single cycle refers to a signal cycle in which the target electrical signal is located at the first moment. In one example, if the target electrical signal includes five signal cycles, wherein the target electrical signal at the first moment is in a first signal cycle, then the single cycle is the first signal cycle.

In one embodiment of the present application, the first parameter values correspond one-to-one to the angles. In one example, if the two-phase signals of the target electrical signal are the first signal and the second signal, respectively, wherein the voltage value of the first signal is ValueA and the voltage value of the second signal is ValueB, then the first parameter value may be ValueA/ValueB; if the angle is $\theta$, then the correspondence between the first parameter value and the angle may be expressed as: $\theta = g$ (ValueA/ValueB). Specifically, $g$ ($\cdot$) may be a linear function, such as an inverse tangent function.

It can be understood that, since the calculation process of obtaining the angle according to the first parameter value is relatively complicated, a real-time calculation may cause the processing time to be longer. In addition, in actual use, the process of signal processing runs in the single-chip microcomputer, and since the calculation rate of the single-chip microcomputer is limited, if the angle calculation is performed directly in the single-chip microcomputer, it will affect the processing progress of the single-chip microcomputer, such that the time cycle of generating the driving signal for the voice coil motor is longer, thereby reducing the zooming rate and focusing rate of the camera.

In view of the above problems, the embodiments of the present application utilize the characteristics of a single-chip microcomputer having a large storage space but a limited processing speed, and propose an idea of exchanging space for time.

Specifically, the first parameter values correspond one-to-one to the storage addresses, wherein one storage address is configured to store one preset value, and preset values correspond one-to-one to angles.

It can be understood that a preset value is first pre-stored in the storage space of the single-chip microcomputer, and then the content is read by addressing. In this way, in the actual operation process, the single-chip microcomputer does not need to perform angle calculation, and the preset value can be read only according to the storage address, which effectively improves the processing speed and causes the single-chip microcomputer to process multiple electrical signals in real time.

In one example, the correspondence between first parameter values, storage addresses and angles may be as shown in the following Table 1:

Table 1

| first parameter value | storage address | preset value | angle |
|---|---|---|---|
| x1 | N1=f (x1) | D1=g (N1) | A1=w (D1) |
| x2 | N2=f (x2) | D2=g (N2) | A2=w (D2) |
| x3 | N3=f (x3) | D3=g (N3) | A3=w (D3) |
| x4 | N4=f (x4) | D4=g (N4) | A4=w (D4) |
| ...... | ...... | ...... | ..... |
| xn | Nn= f (xn) | Dn=g (Nn) | An=w (Dn) |

wherein x represents a first parameter value, N represents a storage address, D represents a preset value, and A represents an angle. N=f(x) represents a correspondence between the first parameter values and the storage addresses. It can be seen that one first parameter value uniquely determines one storage address; D=g(N) represents a correspondence between storage address es and preset values. It can be seen that one storage address is only configured to store one preset value; A=w(D) represents a correspondence between preset values and angles. It can be seen that one preset value uniquely determines one angle.

In one embodiment of the present application, the two-phase signals of the target electrical signal include a first signal and a second signal, and the phase difference between the first signal and the second signal is 90 degrees. The first parameter value can be determined by the ratio of the voltage value of the first signal to the voltage value of the second signal; the preset value can be determined by the arc tangent value of the first parameter value.

In one example, the voltage value of the first signal can be represented by $\sin\theta$, and the voltage value of the second signal can be represented by $\cos\theta$; then the first parameter value can be $\sin\theta/\cos\theta$ (that is, the first parameter value can satisfy the tangent function); the preset value can satisfy arctan ($\sin\theta/\cos\theta$), such that the angle can be determined to be $\theta$, according to the preset value arctan ($\sin\theta/\cos\theta$).

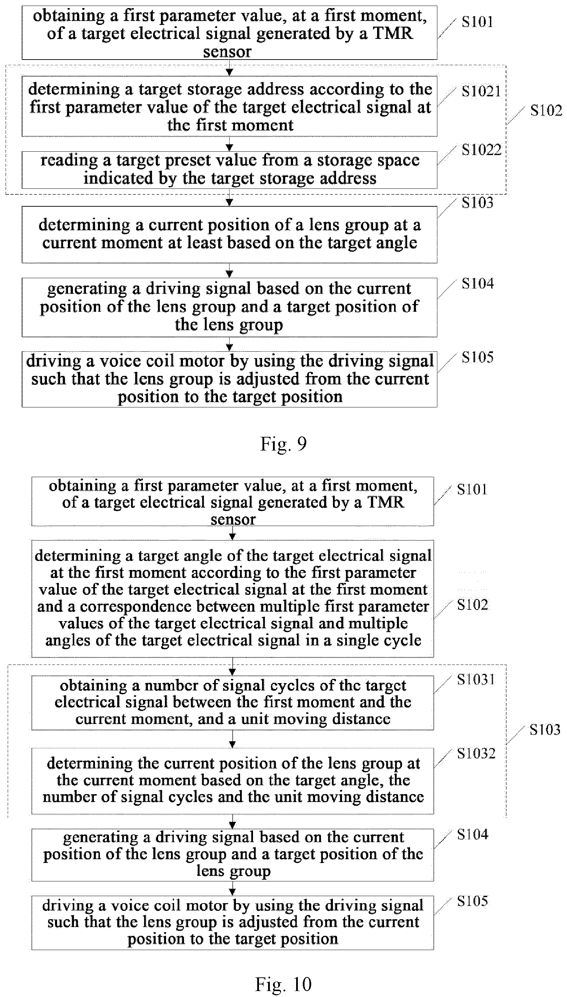

Specifically, as shown in Fig. 9, the above step S102 may include the following steps:
Step S1021, determining a target storage address according to the first parameter value of the target electrical signal at the first moment.

In one example, if the first parameter value at the first moment is x1, the target storage address is: N1=f(x1).

In one embodiment of the present application, S target storage address can be determined based on a base address and an offset address, wherein the base address is a starting address of each storage segment and the offset address is an offset of each base address.

Specifically, the target storage address = the base address (B) + the offset address (N), wherein $0 \leq N \leq Nmax$, and Nmax can be determined based on a memory size and required accuracy of a single-chip microcomputer chip.

Step S1022, reading a target preset value from a storage space indicated by the target storage address.

The target preset value is configured to determine the target angle.

In one example, if the target storage address is: N1=f(x1), then the target preset value is D1=g(N1). The target angle determined according to the target preset value is: A1=w(D1).

Step S103, determining a current position of a lens group at a current moment at least based on the target angle.

In one embodiment of the present application, as shown in Fig. 10, the above Step S103 may include the following steps:
Step S1031, obtaining a number of signal cycles of the target electrical signal between the first moment and the current moment, and a unit moving distance.

The unit moving distance refers to a moving distance of the lens group in one signal cycle. It can be understood that, as shown in Fig. 2, since the lens group and the TMR magnetic strip are hard-connected, the moving distance of the lens group is the moving distance of the TMR magnetic strip.

The number of signal cycles represents the cycle number of the target electrical signal. In one example, the target electrical signal from the first quadrant to the fourth quadrant is one complete signal cycle, and a curve of the target electrical signal is repeated in each signal cycle, and the number of the signal cycles can be obtained by counting the repeated signal segments in the target electrical signal.

Step S1032, determining the current position of the lens group at the current moment based on the target angle, the number of signal cycles and the unit moving distance.

Specifically, step S1032 may include the following steps:
Step a1, determining a position of the TMR sensor in a single cycle based on the target angle.

The position of the TMR sensor represents a position of the TMR magnetic head relative to the TMR magnetic stripe.

Since the length of the TMR magnetic strip is fixed (assuming the length of the TMR magnetic strip is S), the TMR magnetic strip moves under the drive of the voice coil motor, causing the TMR magnetic head to cut the magnetic field from the N pole to the S pole of the TMR magnetic strip. During this period, the unit moving distance of the TMR magnetic strip is S, and the TMR magnetic head generates one electrical signal. Therefore, the unit moving distance 0~ S corresponds to the signal cycle 0°~360° of one electrical signal. In one example, if the unit moving distance S is 600 microns (um), then 0°~360° corresponds to 0~600 um, then 1° corresponds to 1.666666 um, 2° corresponds to 3.3333 3um, and so on.

Therefore, the position of the TMR sensor in the single cycle meets the following Formula (1):

$$t = \frac{Angle/N_{\max}}{360} \cdot S \qquad \text{Formula (1)}$$

wherein $t$ represents the position of the TMR sensor, *Angle* represents the target angle, *Nmax* represents the maximum value of the offset address, and S represents the unit moving distance.

In one example, if the target angle is 66781, the unit moving distance S is 600 um, and Nmax =1000, the position of the TMR sensor in the single cycle =[(66781/1000)/360]*S=111.3 um.

In another example, if the target angle is 157903, the unit moving distance S is 600 um, and Nmax =1000, then the position of the TMR sensor in the single cycle =[(157903/1000)/360]*S=263.172 um.

Step a2, determining the current position of the lens group at the current moment according to the position of the TMR sensor in the single cycle, the number of the signal cycles and the unit moving distance.

It can be understood that since the moving distance of the lens group in one signal cycle is the unit moving distance, the current position of the lens group at the current moment can be determined according to the position of the TMR sensor in the single cycle and a product of the number of signal cycles and the unit moving distance.

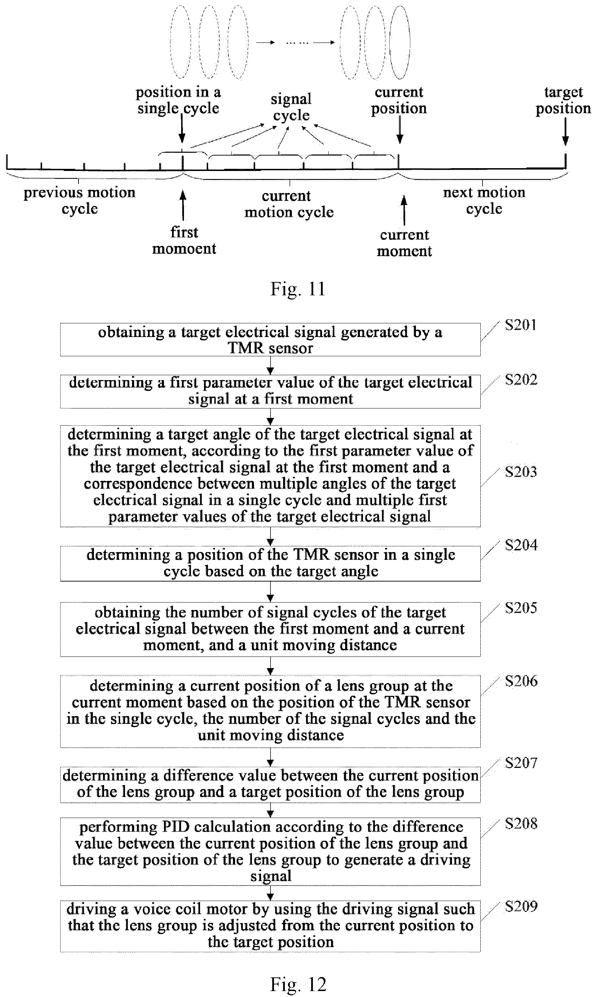

In one example, as shown in Fig. 11, if the target electrical signal of the current motion cycle includes 4.5 signal cycles, the current position of the TMR sensor at the current moment = 4.5× the unit moving distance + the position of the TMR sensor in the single cycle.

In one embodiment of the present application, the current position of the lens group at the current moment meets the following Formula (2):

$$Pos = T \cdot S + t \qquad \text{Formula (2)}$$

wherein *Pos* represents the current position of the lens group at the current moment, and T represents the number of the signal cycles.

Step S104, generating a driving signal based on the current position of the lens group and a target position of the lens group.

Specifically, Step S104 may include the following steps:

Step b1, determining a difference value between the current position of the lens group and the target position of the lens group.

In one example, if the current position of the lens group is *Pos1* and the target position of the lens group is *Pos2,* the difference value between the current position of the lens group and the target position of the lens group is: Pos2-Pos1

Step b2, performing proportion integral differential (PID) operation according to the difference value between the current position of the lens group and the target position of the lens group, to generate the driving signal.

The PID operation refers to a closed-loop operation of proportion, integral and differential. The basis of the PID operation is the proportion operation; the integral operation can eliminate steady-state errors, but can increase overshoot; the differential operation can speed up response speed of a large inertia system and reduce the overshoot trend. In this way, the drive signal determined based on the PID operation can better correct the system.

In one embodiment of the present application, the driving signal may be a pulse width modulation (PWM) signal.

In one embodiment of the present application, one motion cycle corresponds to one driving signal, and a time difference between two adjacent driving signals generated by the control apparatus is less than or equal to a preset threshold value. In this way, the voice coil motor can receive the driving signal in time, and then the voice coil motor drives the lens group to move faster, thereby increasing zooming rate and/or focusing rate of the camera.

In one embodiment of the present application, after the drive signal is generated through PID operation, the method further includes: performing low-pass filtering processing and/or mean filtering processing on the generated driving signal.

It can be understood that the driving signal generated through the PID operation may include some noise signals. If the voice coil motor is driven directly according to the driving signal, the operation of the voice coil motor may be unstable (for example, there may be a large driving signal that causes the voice coil motor to suddenly increase its speed; or there may be a small driving signal that causes the voice coil motor to suddenly reduce its speed, etc.). Therefore, the driving signal can be optimized through low-pass filtering and/or mean filtering, such that the operation of the voice coil motor is more stable.

Step S105, driving a voice coil motor by using the driving signal such that the lens group is adjusted from the current position to the target position.

In one embodiment of the present application, the voice coil motor is controlled to operate by using a duty cycle of a PWM signal, such that the lens group is adjusted from the current position to the target position.

The duty cycle of the PWM signal is a ratio of a high level of the PWM signal in one pulse cycle to that in an entire pulse cycle. For example, the duty cycle of the PWM signal with a high level for 1 second and a low level for 1 second is 50%.

It can be understood that the voice coil motor can drive the focus lens group to adjust from the current position to the target position according to the driving signal, thereby achieving focusing; the voice coil motor can also drive the zoom lens group to adjust from the current position to the target position according to the driving signal, thereby achieving zooming.

In the driving method provided by the embodiment of the present application, the first parameter value of the target electrical signal at the first moment generated by the TMR sensor is obtained, and the target angle of the target electrical signal at the first moment is determined according to a correspondence between first parameter values and angles; then the current position of the lens group is determined based on the target angle, and the driving signal is generated according to the target position and the current position, such that the voice coil motor drives the lens group to adjust from the current position to the target position according to the driving signal. It can be understood that in the process of determining the driving signal, if the single-chip microcomputer needs to calculate the target angle in real time, which will consume a lot of time and calculating resources. Therefore, based on the method provided by the embodiment of the present application, the target angle can be determined according to the correspondence between the first parameter values and the angles, the target angle does not need to be calculated in real time, the current position of the lens group can be quickly determined, and then the driving signal is generated according to the current position of the lens group and the target position of the lens group. When the method provided by the embodiment of the present application is applied to the camera lens, the zooming rate and focusing rate of the camera lens can be increased, and thus the zooming action and/or focusing action of the camera lens can be realized in a short time.

For ease of understanding below, the driving method provided by the embodiment of the present application is described by taking a preset value stored in the single-chip microcomputer as an arc tangent value of the first parameter value of the target electrical signal as an example. Specifically, as shown in Fig. 12, the driving method provided by the embodiment of the present application may also include:

Step S201, obtaining a target electrical signal generated by a TMR sensor. Two-phase signals of the target electrical signal are represented by $\sin\theta$ and $\cos\theta$. The target electrical signal is an electrical signal generated by the TMR sensor between a first moment and a current moment. The first moment is before the current moment.

Step S202, determining a first parameter value of the target electrical signal at a first moment. The first parameter value is a ratio (i.e., $x = ValueA / ValueB = \sin\theta / \cos\theta = \tan\theta$) of a voltage value of a first signal (i.e., $ValueA = \sin\theta$) to a voltage value of a second signal (i.e., $ValueB = \cos\theta$).

Step S203, determining a target angle of the target electrical signal at the first moment, according to the first parameter value of the target electrical signal at the first moment and a correspondence between multiple angles of the target electrical signal in a single cycle and multiple first parameter values of the target electrical signal. The first parameter values correspond one-to-one to the angles.

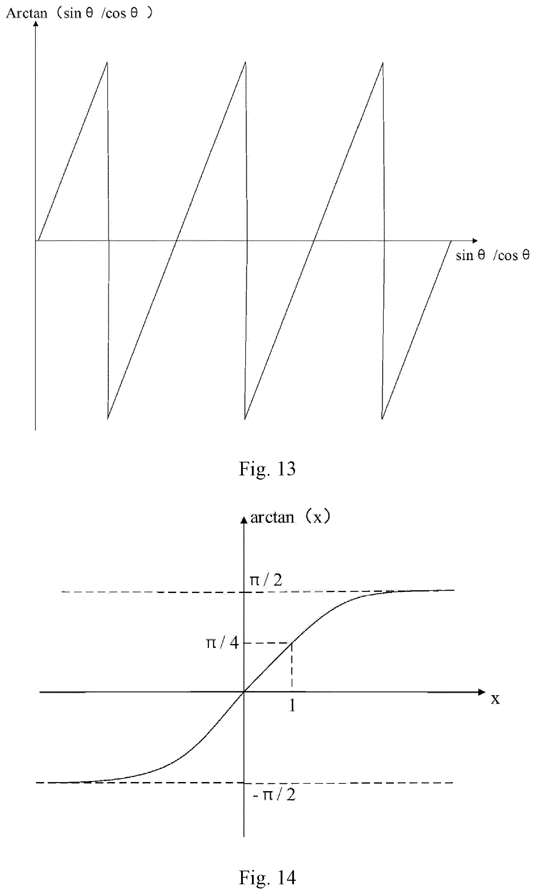

In one example, as shown in Fig. 13, the correspondence between multiple angles of the target electrical signal in a single cycle and multiple first parameter values of the target electrical signal can be represented by an inverse tangent function. For example, if the first parameter value is $\sin\theta / \cos\theta$, the angle of the target electrical signal in the single cycle can be $\arctan(\sin\theta / \cos\theta) = \theta$, that is, the angle of the target electrical signal in the single cycle can be obtained by calculating an arc tangent of the first parameter value.

It can be understood that since the first signal of the target electrical signal and the second signal of the target electrical signal are complex trigonometric function signals, in order to simplify the calculation process, when determining an angle of the target electrical signal in the single cycle according to a first parameter value of the target electrical signal, it is possible to consider converting the complex signal into a simpler linear signal for calculation to improve the calculation rate. For example, since the arc tangent trigonometric function is linear in the single cycle, the arc tangent of the first parameter value can be calculated to obtain the angle of the target electrical signal in the single cycle.

However, since the control apparatus runs in a single-chip microcomputer, and the operation rate of the single-chip microcomputer is limited, if a trigonometric function operation is performed directly in the single-chip microcomputer, the control effect is poor. The specific reasons are as follows: on the one hand, the calculation of trigonometric functions by the single-chip microcomputer usually consumes a lot of time, and it is impossible to quickly analyze the target electrical signal to obtain the target angle; on the other hand, since the voice coil motor has no holding force, it is necessary to frequently transmit the driving signal to the voice coil motor, and the rate at which the driving signal is generated depends on the time consumed by one cycle of the driving method shown in Fig. 1. In order to obtain a smoother and more stable control effect, the processing flow needs to be as fast as possible. According to conclusions drawn from the current experiments, the cycle frequency needs to be above 50Khz to achieve a better control effect for the zoom voice coil motor and the focus voice coil motor at the same time, which means that one processing flow needs to be completed within 20us, and the single-chip microcomputer needs to process multiple voice coil motors at the same time, so the analysis of the target electrical signal needs to be completed within 1us, but it is obviously impossible to complete it currently.

Therefore, the embodiment of the present application determines the arc tangent value of the target electrical signal by addressing. Specifically, firstly, a preset value is pre-stored in the storage space of the single-chip microcomputer, and then the content is read by addressing. The above preset value is the arc tangent value of the first parameter value.

In one embodiment of the present application, first parameter values correspond one-to-one to storage addresses, wherein one storage address is configured to store one preset value, and preset values correspond one-to-one to angles.

In one embodiment of the present application, the above storage address = the base address (B) + the offset address (N).

In one example, the offset address may be determined according to the first parameter value. For example, the offset address may meet the following Formula (3):

$$N = x \cdot N_{max}$$ 　　Formula (3)

wherein N represents the offset address, x represents the first parameter value, and the first parameter value x is determined by the ratio of the voltage value of the first signal to the voltage value of the second signal. In one example, if $AbsA \geq AbsB$, the first parameter value x can be AbsB/AbsA, and the offset address $N=AbsB/AbsA \cdot Nmax$; if $AbsA < AbsB$, the first parameter value x can be AbsA/AbsB, and the offset address $N=AbsA/AbsB \cdot Nmax$. AbsA represents the absolute value of the voltage value of the first signal, and AbsB represents the absolute value of the voltage value of the second signal. In addition, in order to avoid the pressure of floating-point type on the single-chip microcomputer, it is necessary to multiply by Nmax during calculation to convert a decimal value into an integer value. In one example, the value of Nmax can be 1000.

It can be seen that one first parameter value can uniquely determine one storage address, that is, the first parameter values correspond one-to-one to the storage addresses.

In one example, the preset value stored in the above storage address may meet the following Formula (4):

$$D = arctan（N/Nmax）\cdot Nmax$$ 　　Formula (4)

wherein D is a rounded integer. In addition, so as to avoid the pressure of floating point type on the single-chip microcomputer, it is necessary to multiply by Nmax during calculation.

In one example, as shown in the following Table 2, if Nmax=1000, when the offset address is N=0, the preset value D≈arctan(0/1000)·1000=0 is stored in the storage space at the storage address B+0; when the offset address is N=1, the preset value D≈arctan(1/1000)·1000=57 is stored in the storage space at the storage address B+1; when the offset address is N=2, the preset value D≈arctan(2/1000)·1000=115 is stored in the storage space at the storage address B+2; when the offset address is N=1000, the preset value D≈arctan(1000/1000)·1000=45000 is stored in the storage space at the storage address B+1000.

Table 2

| offset address | storage address | preset value |
|---|---|---|
| 0 | B+0 | D≈arctan(0/1000)·1000=0 |
| 1 | B+1 | D≈arctan(1/1000)· 1000-57 |
| 2 | B+2 | D≈arctan(2/1000)·1000=115 |
| 1000 | B+1000 | D≈arctan(1000/1000)·1000=45000 |

In one embodiment of the present application, as shown in Fig. 14, the image of the inverse tangent function is a centrosymmetric function with a range of [-90°, 90°]. When the range is in the range of [0°, 45°], as the domain increases, the slope of the inverse tangent function graph is higher. When the range is in the range of [45°, 90°], as the domain increases (until infinity), the slope of the inverse tangent function graph approaches 0, and is infinitely close to 0. It can be seen that when storing preset values, the arc tangent values with a range of [45°, 90°] cannot be stored (that is, storing these preset values will consume a large amount of memory). Therefore, the embodiment of the present application only stores the arc tangent values with a range of [0, 45°] as the preset values, and then performs inverse tangent operations from 0° to 360° by using the angle conversion relationship.

In one example, since the first parameter value (the ratio between the voltage value of the first signal and the voltage value of the second signal) reflects the tangent value, and tan(0°)=0, tan(45°)=1, the range of the first parameter value is between 0 and 1, and the range of the arc tangent values of the first parameter values stored in the storage address is between arctan(0) and arctan(1). For example, the preset values stored in the storage addresses of the single-chip microcomputer can be as shown in the following Table 3:

Table 3

| ValueA/ValueB (tan0°~tan45°) | offset address N | preset value D |
| --- | --- | --- |
| 0 | 0 | arctan (0) ·1000 |
| 0.001 | 1 | arctan (0.001) ·1000 |
| 0.002 | 2 | arctan (0.002) ·1000 |
| 0.003 | 3 | arctan (0.003) ·1000 |
| ...... | ...... | ...... |
| 1 | 1000 | arctan (1) ·1000 |

the above are preset values stored in the single-chip microcomputer in the range of [0°, 45°]. The following describes how to determine an actual angle of the target electrical signal in a single cycle according to the preset values stored in the single-chip microcomputer and a relationship between ValueA and ValueB.

1. First, it is determined whether the angle of the target electrical signal is between 0° and 45° according to a relationship between the absolute value AbsA of the voltage value ValueA of the first signal and the absolute value AbsB of the voltage value ValueB of the second signal.

If AbsA>AbsB, it is determined that the angle of the target electrical signal is between 0° and 45°.

If AbsA≤AbsB, it is determined that the angle of the target electrical signal is between 45° and 90°.

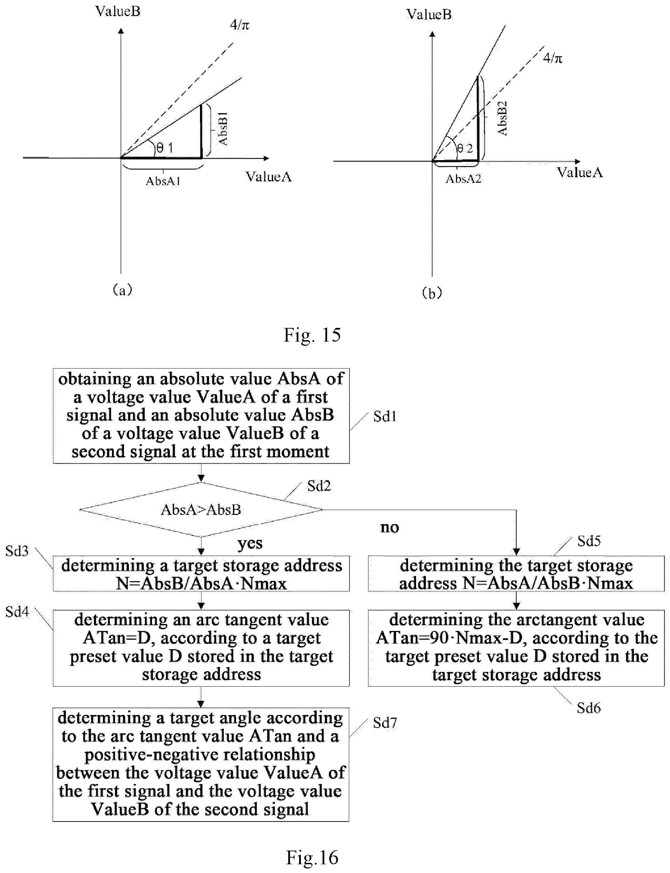

It can be understood that since the tangent value refers to a ratio of an opposite side of a certain acute angle to the other adjacent right-angled side in a right-angled triangle. As shown in Fig. 15, with ValueA as an x-axis and ValueB as a y-axis, an angle determined by AbsA and AbsB is in the first quadrant. As shown in (a) of Fig. 15, if an angle $\theta1$ is between 0° and 45°, then $\tan\theta1$=AbsB1/AbsA1; and AbsA1>AbsB1; as shown in (b) of Fig. 15, if an angle $\theta2$ is between 45° and 90°, then $\tan\theta2$=AbsB2/AbsA2; and AbsA2≤AbsB2. Therefore, the embodiment of the present application can determine whether the angle of the target electrical signal is between 0° and 45° according to the relationship between AbsA and AbsB.

2. Secondly, the offset address is determined according to the angle range of the target electrical signal.

If the angle of the target electrical signal is within the range of 0 to 45°, the offset address N=AbsB/AbsA·Nmax is determined.

If the angle of the target electrical signal is within the range of 45° to 90°, the offset address N=AbsA/AbsB ·Nmax is determined.

3. Then, the storage address is determined according to the offset address, and the preset value D is taken out from the storage address.

The storage address = the base address (B) + the offset address (N). The preset value D stored in the storage address = arctan (N/Nmax)·Nmax.

4. The arc tangent value ATan is determined according to the preset value D.

Since the preset value stored in the storage address is the arc tangent value of the first parameter value, the preset value D should be equal to the arc tangent value. However, when AbsA≤AbsB (that is, the angle of the target electrical signal is within 45° to 90°), the determined offset address is N=AbsA/AbsB·Nmax, that is, the angle of the target electrical signal is transformed to the range of 0 to 45°. Therefore, an actual angle of the target electrical signal and the angle determined by arctan(AbsB/AbsA) are complementary angles. When N=AbsB/AbsA·Nmax, the arc tangent value determined according to the preset value D: ATan=90°·Nmax-D.

Specifically:
if AbsA>AbsB, then the offset address N=AbsB/AbsA·Nmax, the preset value D=arctan(N/Nmax)·Nmax, and the arc tangent value Atan=D.

If AbsA≤AbsB, then the offset address N=AbsA/AbsB·Nmax, the preset value D= arctan(N/Nmax)·Nmax, and the arc tangent value Atan=90°·Nmax-D.

5. The angle Angle is determined according to the arc tangent value ATan and the positive-negative relationship between ValueA and ValueB.

If ValueA≥0 and ValueB>0, then the angle Angle=ATan.

If ValueA<0 and ValueB≥0, then the angle Angle=180°·Nmax-ATan.

If ValueA≤0 and ValueB<0, then the angle Angle=180°·Nmax+ATan.

If ValueA>0 and ValueB<0, then the angle Angle=360°·Nmax-ATan.

Therefore, on the basis that the preset value is stored in the single-chip microcomputer and the correspondence between the preset value, the tangent value and the angle is defined in the single-chip microcomputer, the above step S202 may include the following steps:

Step c1, determining a target storage address according to the first parameter value of the target electrical signal at the first moment.

In one example, the target storage address is base address (B) + target offset address (N1), wherein the target offset address N1 is determined by the first parameter value at the first moment. When the voltage value of the first signal of the target electrical signal at the first moment is ValueA1, and the voltage value of the second signal of the target electrical signal is ValueB1, wherein the absolute value of ValueA1 is AbsA1, the absolute value of ValueB1 is AbsB1, and AbsA1>AbsB1, then the first parameter value x1=AbsB1/AbsA1, and the target offset address is N1=(AbsB1/AbsA1)·Nmax.

For example, if the value of Nmax is 1000; the voltage value ValueA1 of the first signal of the target electrical signal at the first moment is (-30) V, and the voltage value ValueB1 of the second signal of the target electrical signal at the first moment is 20 V, then the absolute value AbsA1 of ValueA1 is 30, and the absolute value AbsB1 of ValueB1 is 20. Since 30>20, the first parameter value x1=AbsB1/AbsA1=20/30=0.667, and the target storage address is N1=(AbsB1/AbsA1)·Nmax =(20/30)·Nmax =0.667×1000=667.

Step c2, reading a target preset value from a storage space indicated by the target storage address.

In one example, if the target storage address is: B+N, then the target preset value D=arctan(N/Nmax)·Nmax.

In one embodiment of the present application, the target preset value is configured to determine the target angle. Specifically, it can be implemented as the following steps:

in one embodiment of the present application, the method further includes determining the target angle according to the target preset value and the positive-negative relationship between the voltage value of the first signal at the first moment and the voltage value of the second signal at the first moment. Specifically, it can be implemented as follows: first, the arc tangent value of the target electrical signal is determined according to the target preset value. Then, the target angle is determined according to the arc tangent value of the target electrical signal, and the positive-negative relationship between the voltage value of the first signal of the target electrical signal and the voltage value of the second signal of the target electrical signal.

For ease of understanding, taking Fig. 16 as an example, the above Step S202 is described below. In one example, the above Step S202 includes the following steps:

Step Sd1, obtaining an absolute value AbsA of a voltage value ValueA of a first signal and an absolute value AbsB of a voltage value ValueB of a second signal at the first moment.

Step Sd2, determining whether AbsA>AbsB is met.

If AbsA>AbsB is met, performing Step Sd3.

If AbsA>AbsB is not met, performing Step Sd5.

Step Sd3, determining a target storage address N=AbsB/AbsA·Nmax.

Step Sd4, determining an arc tangent value ATan=D, according to a target preset value D stored in the target storage address.

$$D = \arctan(N/Nmax)\cdot Nmax.$$

Step Sd5, determining the target storage address N=AbsA/AbsB·Nmax.

Step Sd6: determining the arc tangent value ATan=90Nmax-D, according to the target preset value D stored in the target storage address.

$$D=\arctan(N/Nmax)\cdot Nmax.$$

Step Sd7, determining a target angle according to the arc tangent value ATan and a positive-negative relationship between the voltage value ValueA of the first signal and the voltage value ValueB of the second signal.

In one example, if ValueA=1200, ValueB=2800, Nmax=1000; then AbsA=1200, AbsB=2800, then AbsA<AbsB, thus N=AbsA/AbsB • Nmax= (1200/2800) × 1000=428.5714286≈429, thus, D=arctan (N/Nmax) •Nmax = arctan (429/1000) × 1000=23219; then ATan=90° × 1000-23219=66781; then ValueA>0, ValueB>0, thus the target angle is 66781.

In another example, if ValueA=-3200, ValueB=1300, Nmax=1000; then AbsA=3200, AbsB=1300, then AbsA>AbsB, thus N=AbsB/AbsANmax=(1300/3200)×1000=406.25≈406, thus, D=arctan(N/Nmax) Nmax=arctan(406/1000)×1000=22097; then ATan=22097; then ValueA<0, ValueB>0, thus the target angle is 180°·Nmax-Atan=180°×1000-22097=157903.

Step S204, determining a position of the TMR sensor in a single cycle based on the target angle.

For details, content of Step a1 in Step S1032 above may be referred.

Step S205, obtaining a number of signal cycles of the target electrical signal between the first moment and a current moment, and a unit moving distance.

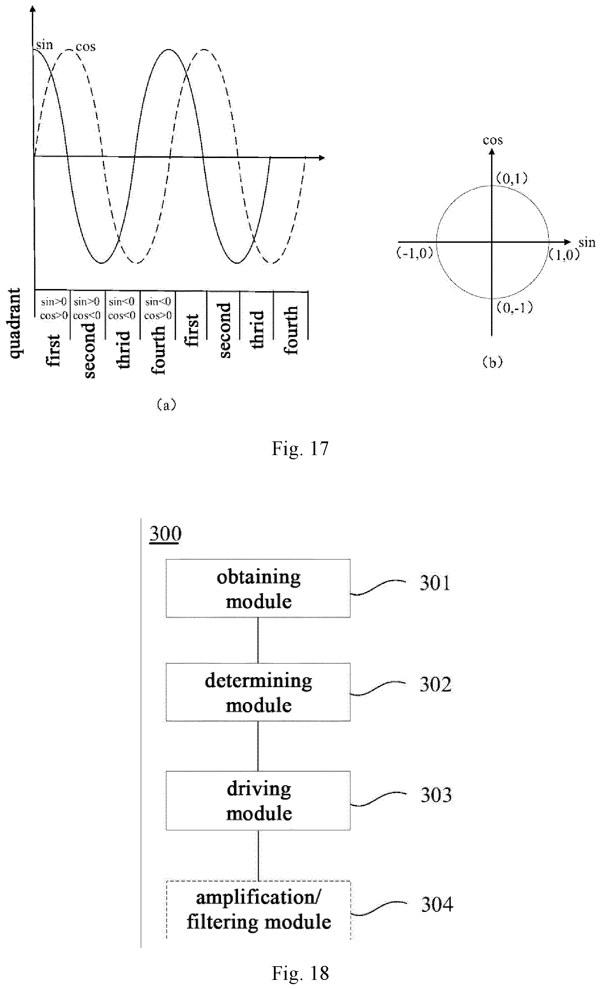

The number of the signal cycles represents the cycle number of the target electrical signal. In one example, as shown in Fig. 17(a), the target electrical signal from the first quadrant to the fourth quadrant is one complete signal cycle, and a curve of the target electrical signal is repeated in each signal cycle, and the number of the signal cycles can be obtained by counting repeated signal segments in the target electrical signal.

In another example, if the two-phase signals of the target electrical signal are the first signal and the second signal, as shown in Fig. 17(b), a coordinate system is established with the first signal (sin) as the horizontal coordinate and the second signal (cos) as the vertical coordinate, and a value of the target electrical signal is marked in the coordinate system, and a circle is drawn. The number of the signal cycles can be determined by counting the number of the circles of the target electrical signal.

Step S206, determining a current position of a lens group at the current moment based on the position of the TMR sensor in the single cycle, the number of the signal cycles and the unit moving distance.

For details, content of Step a2 in Step S1032 above may be referred.

Step S207, determining a difference value between the current position of the lens group and a target position of the lens group.

For details, content of Step b1 in Step S104 above may be referred.

Step S208, performing PID calculation according to the difference value between the current position of the lens group and the target position of the lens group to generate a driving signal.

For details, content of Step b2 in Step S104 above may be referred.

Step S209, driving a voice coil motor by using the driving signal such that the lens group is adjusted from the current position to the target position.

For details, content of Step S105 above may be referred.

As shown in Fig. 18, an embodiment of the present application provides a driving apparatus for performing the driving method shown in Fig. 5. The driving apparatus 300 includes an obtaining module 301, a determining module302 and a driving module 303. In one embodiment of the present application, the driving apparatus 300 further includes an amplification/filtering module 304.

The obtaining module 301 is configured to obtain a first parameter value, at a first moment, of a target electrical signal generated by a TMR sensor; wherein the target electrical signal is an electrical signal generated by the TMR sensor between the first moment and a current moment; the first moment is before the current moment, and the first parameter value is configured to represent a ratio between two-phase signals of the target electrical signal.

The determining module302 is configured to determine a target angle of the target electrical signal at the first moment according to the first parameter value of the target electrical signal at the first moment and a correspondence between multiple first parameter values of the target electrical signal and multiple angles of the target electrical signal in a single cycle; wherein the first parameter values correspond one-to-one to the angles.

The determining module302 is further configured to determine a current position of the lens group at the current moment at least based on the target angle; the driving module is configured to generate a driving signal based on the current position of the lens group and a target position of the lens group.

The driving module 303 is further configured to drive the voice coil motor by using the driving signal, such that the lens group is adjusted from the current position to the target position.

In one possible implementation, the first parameter values correspond one-to-one to storage addresses, wherein one storage address is configured to store one preset value, and the preset values correspond one-to-one to the angles; the determining module302 is specifically configured to determine a target storage address according to the first parameter value of the target electrical signal at the first moment; read a target preset value from a storage space indicated by the target storage address; wherein the target preset value is configured to determine the target angle.

In one possible implementation, the two-phase signals of the target electrical signal includes a first signal and a second signal, and a phase difference between the first signal and the second signal is 90 degrees; the first parameter value is determined by a ratio of a voltage value of the first signal to a voltage value of the second signal; and the preset value is determined by an arc tangent value of the first parameter value.

In one possible implementation, the determining module 302 is further configured to determine the target angle according to the target preset value and a positive-negative relationship between the voltage value of the first signal at the first moment and the voltage value of the second signal at the first moment.

In one possible implementation, the determining module 302 is specifically configured to obtain the number of signal cycles of the target electrical signal between the first moment and the current moment, and a unit moving distance; wherein the unit moving distance refers to a moving distance of the lens group in one signal cycle; and determine the current position of the lens group at the current moment based on the target angle, the number of signal cycles and the unit moving distance.

In one possible implementation, the determining module 302 is specifically configured to determine a position of the TMR sensor in a single cycle based on the target angle; wherein the TMR sensor includes a TMR magnetic head and a TMR magnetic strip; the TMR magnetic head is configured to generate a magnetic field, and the TMR magnetic strip is configured to cut the magnetic field generated by the TMR magnetic head; the position of the TMR sensor represents a position of the TMR magnetic head relative to the TMR magnetic strip; determine the current position of the lens group at the current moment according to the position of the TMR sensor in the single cycle, the number of the signal cycles and the unit moving distance.

In one possible implementation, the driving module 303 is specifically configured to determine a difference value between the current position of the lens group and the target position of the lens group; perform proportional differential integral PID operation on the difference value between the current position of the lens group and the target position of the lens group to generate the driving signal.

In one possible implementation, the driving apparatus 300 further includes an amplification/filtering module 304, which is configured to perform at least one of amplification processing and filtering processing on the target electrical signal.

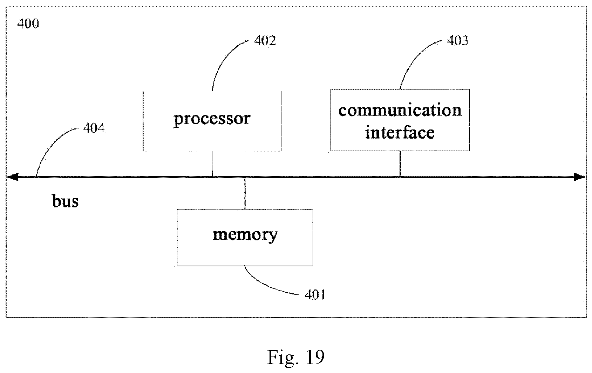

When the functions of the above-mentioned integrated modules are implemented in the form of hardware, an embodiment of the present application provides another possible structural schematic diagram of the driving apparatus involved in the above-mentioned embodiment. As shown in Fig. 19, the driving apparatus 400 includes a processor 402, a communication interface 403, and a bus 404. Specifically, the driving apparatus may also include a memory 401.

The processor 402 may be a logic block, module and circuit that implements or executes various examples described in conjunction with the disclosure of the present application. The processor 402 may be a central processing unit, a general-purpose processor, a digital signal processor, an application-specific integrated circuit, a field programmable gate array or other programmable logic device, a transistor logic device, a hardware component or any combination thereof. The processor may be a logic block, module and circuit that implements or executes various examples described in conjunction with the disclosure of the present application. The processor 402 may also be a combination that implements calculating functions, such as a combination of one or more microprocessors, a combination of a DSP and a microprocessor, etc.

The communication interface 403 is configured to connect with other devices via a communication network, which may be Ethernet, wireless access network, wireless local area network (WLAN), etc.

The memory 401 may be a read-only memory (ROM) or other types of static storage devices that can store static information and instructions therein, a random access memory (RAM) or other types of dynamic storage devices that can store information and instructions therein, or an electrically erasable programmable read-only memory (EEPROM), a disk storage medium or other magnetic storage device, or any other medium that can be used to carry or store desired program codes in the form of instructions or data structures and can be accessed by a computer, which is not limited thereto.

As one possible implementation, the memory 401 may exist independently of the processor 402, and the memory 401 may be connected with the processor 402 via the bus 404 to store instructions or program codes. When the processor 402 calls and executes the instructions or program codes stored in the memory 401, the driving method provided by the embodiment of the present application can be implemented.

**In** one possible implementation, the memory 401 may also be integrated with the processor 402.

The bus 404 may be an extended industry standard architecture (EISA) bus, etc. The bus 404 may be divided into an address bus, a data bus, a control bus, etc. For ease of representation, only one thick line is used in Fig. 19, which does not mean that there is only one bus or one type of bus.

Through the description of the above implementations, those skilled in the art can clearly understand that for the convenience and simplicity of description, only division of the above-mentioned functional modules is used as an example. **In** actual applications, the above-mentioned functions can be assigned to different functional modules as needed, that is, an internal structure of the driving apparatus can be divided into different functional modules to complete all or part of the functions described above.

An embodiment of the present application further provides a computer-readable storage medium. All or part of the processes in the above method embodiments can be completed by computer instructions to instruct the relevant hardware, and the above computer-readable storage medium can store a program therein, which when executed, can include the processes of the above method embodiments. The computer-readable storage medium can be a memory of any of the above embodiments. The above computer-readable storage medium can also be an external storage device of the above driving apparatus, such as a plug-in hard disk, a smart memory card (SMC), a secure digital (SD) card, a flash card, etc. equipped on the above driving apparatus. Further, the above computer-readable storage medium can also include both an internal storage unit and an external storage device of the above driving apparatus. The above computer-readable storage medium is used to store the above computer program and other programs and data required by the above driving apparatus. The above computer-readable storage medium can also be used to temporarily store data that has been output or is to be output.

An embodiment of the present application further provides a computer program product including a computer program, which when running on a computer, causes the computer to carry out any one of the driving methods provided by the above embodiments.

Although the present application is described herein in conjunction with various embodiments, in the process of implementing the present application, those skilled in the art may understand and implement other changes to the disclosed embodiments by viewing the accompanying drawings, the disclosure, and the appended claims. In the claims, word "comprising" does not exclude other components or steps, and "one" or "an" does not exclude multiple situations. A single processor or other unit may implement several functions listed in the claims. Certain measures are recorded in different dependent claims, but this does not mean that these measures cannot be combined to produce good results.

Although the present application has been described in conjunction with specific features and embodiments thereof, it is obvious that various modifications and combinations may be made thereto without departing from the spirit and scope of the present application. Accordingly, this specification and the accompanying drawings are merely exemplary illustrations of the present application as defined by the appended claims, and are deemed to have covered any and all of modifications, variations, combinations or equivalents within the scope of the present application. Obviously, those skilled in the art may make various modifications and variations to the present application without departing from the spirit and scope of the present application. Thus, if these modifications and variations of the present application fall within the scope of the claims of the present application and their equivalents, the present application is also intended to include these modifications and variations.

The above descriptions are only preferred embodiments of the present application, and are not intended to limit the present application. Any modifications, equivalent replacements, improvements and the like made within the spirit and principles of the present application shall be included within the scope of protection of the present application.

## Claims

1. A camera electric motor driving method based on a tunnel magneto resistance, TRM, sensor, wherein the camera comprises a lens group, a voice coil motor and the TMR sensor which are connected to the lens group respectively, wherein the voice coil motor is configured to control a movement of the lens group; and the TMR sensor is configured to generate an electrical signal during the movement of the lens group;
   the method comprises:

   obtaining a first parameter value, at a first moment, of a target electrical signal generated by the TMR sensor; wherein the target electrical signal is an electrical signal generated by the TMR sensor between the first moment and a current moment; the first moment is before the current moment, and the first parameter value is configured to represent a ratio between two-phase signals of the target electrical signal;
   determining a target angle of the target electrical signal at the first moment according to the first parameter value of the target electrical signal at the first moment and a correspondence between multiple first parameter values of the target electrical signal and multiple angles of the target electrical signal in a single cycle; wherein the first parameter values correspond one-to-one to the angles;
   determining a current position of the lens group at the current moment at least based on the target angle;
   generating a driving signal based on the current position of the lens group and a target position of the lens group;
   driving the voice coil motor by using the driving signal, such that the lens group is adjusted from the current position to the target position.

2. The method according to claim 1, wherein the first parameter values correspond one-to-one to storage addresses, wherein one storage address is configured to store one preset value, and preset values correspond one-to-one to the angles;
   determining the target angle of the target electrical signal at the first moment according to the first parameter value of the target electrical signal at the first moment and the correspondence between the multiple first parameter values of the target electrical signal and the multiple angles of the target electrical signal in the single cycle comprises:

   determining a target storage address according to the first parameter value of the target electrical signal at the first moment;
   reading a target preset value from a storage space indicated by the target storage address; wherein the target preset value is configured to determine the target angle.

3. The method according to claim 2, wherein the two-phase signals of the target electrical signal comprise a first signal and a second signal, and a phase difference between the first signal and the second signal is 90 degrees;

the first parameter value is determined by a ratio of a voltage value of the first signal to a voltage value of the second signal; and

the preset value is determined by an arc tangent value of the first parameter value.

4. The method according to claim 3, wherein determining the target angle of the target electrical signal at the first moment according to the first parameter value of the target electrical signal at the first moment and the correspondence between the multiple first parameter values of the target electrical signal and the multiple angles of the target electrical signal in the single cycle further comprises:
determining the target angle according to the target preset value and a positive-negative relationship between the voltage value of the first signal at the first moment and the voltage value of the second signal at the first moment.

5. The method according to claim 1, wherein determining the current position of the lens group at the current moment at least based on the target angle comprises:

obtaining a number of signal cycles of the target electrical signal between the first moment and the current moment, and a unit moving distance; wherein the unit moving distance refers to a moving distance of the lens group in one signal cycle; and

determining the current position of the lens group at the current moment based on the target angle, the number of signal cycles and the unit moving distance.

6. The method according to claim 5, wherein determining the current position of the lens group at the current moment based on the target angle, the number of the signal cycles and the unit moving distance comprises:

determining a position of the TMR sensor in the single cycle based on the target angle; wherein the TMR sensor comprises a TMR magnetic head and a TMR magnetic strip; the TMR magnetic head is configured to generate a magnetic field, and the TMR magnetic strip is configured to cut the magnetic field generated by the TMR magnetic head; the position of the TMR sensor represents a position of the TMR magnetic head relative to the TMR magnetic strip;

determining the current position of the lens group at the current moment according to the position of the TMR sensor in the single cycle, the number of the signal cycles and the unit moving distance.

7. The method according to claim 1, wherein generating the driving signal based on the current position of the lens group and the target position of the lens group comprises:

determining a difference value between the current position of the lens group and the target position of the lens group;

performing proportion integral differential, PID, operation on the difference value between the current position of the lens group and the target position of the lens group, to generate the driving signal.

8. The method according to claim 1, wherein before obtaining the first parameter value, at the first moment, of the target electrical signal generated by the TMR sensor, the method further comprises:
performing at least one of amplification processing and filtering processing on the target electrical signal.

9. The method according to claim 1, wherein before obtaining the first parameter value, at the first moment, of the target electrical signal generated by the TMR sensor, the method further comprises:
performing analog-to-digital conversion processing on the target electrical signal to obtain a digital signal of the target electrical signal, wherein the digital signal of the target electrical signal comprises discrete voltage values.

10. The method according to claim 1, wherein driving the voice coil motor by using the driving signal, such that the lens group is adjusted from the current position to the target position comprises:
controlling the voice coil motor to operate by using a duty cycle of a pulse width modulation, PWM, signal, such that the lens group is adjusted from the current position to the target position.

11. The method according to claim 1, wherein the single cycle is a signal cycle in which the target electrical signal is located at the first moment.

12. The method according to claim 1, wherein one motion cycle corresponds to one driving signal, and a time difference between two adjacent driving signals is less than or equal to a preset threshold.

13. The method according to claim 6, wherein the position of the TMR sensor in the single cycle meets the following formula:

$$t = \frac{Angle/N_{\max}}{360} \cdot S$$

wherein t represents the position of the TMR sensor, *Angle* represents the target angle, *Nmax* represents a maximum value of an offset address, and S represents the unit moving distance;
the current position of the lens group at the current moment meets the following formula:

$$Pos = T \cdot S + t$$

wherein *Pos* represents the current position of the lens group at the current moment, and *T* represents the number of the signal cycles.

14. The method according to claim 7, wherein the driving signal is a pulse width modulation signal.

15. The method according to claim 7, wherein after performing the PID operation on the difference value between the current position of the lens group and the target position of the lens group, to generate the driving signal, the method further comprises:
performing low-pass filtering processing and/or mean filtering processing on the generated driving signal.

Fig. 1

Fig. 2

| signal amplification module 210 | low-pass filter module 220 | analog-to-digital conversion module 230 | logic control module 240 | pulse modulation module 250 |

Fig. 3

Fig. 4

obtaining a first parameter value, at a first moment, of a target electrical signal generated by a TMR sensor | S101

determining a target angle of the target electrical signal at the first moment according to the first parameter value of the target electrical signal at the first moment and a correspondence between multiple first parameter values of the target electrical signal and multiple angles of the target electrical signal in a single cycle | S102

determining a current position of a lens group at a current moment at least based on the target angle | S103

generating a driving signal based on the current position of the lens group and a target position of the lens group | S104

driving a voice coil motor by using the driving signal such that the lens group is adjusted from the current position to the target position | S105

Fig.5

TMR
magnetic head

A phase  B phase

magnetic
field

TMR
magnetic
stripe

N                    S

Fig. 6

Fig. 7

Fig. 8

obtaining a first parameter value, at a first moment, of a target electrical signal generated by a TMR sensor — S101

determining a target storage address according to the first parameter value of the target electrical signal at the first moment — S1021

reading a target preset value from a storage space indicated by the target storage address — S1022

S102

determining a current position of a lens group at a current moment at least based on the target angle — S103

generating a driving signal based on the current position of the lens group and a target position of the lens group — S104

driving a voice coil motor by using the driving signal such that the lens group is adjusted from the current position to the target position — S105

Fig. 9

obtaining a first parameter value, at a first moment, of a target electrical signal generated by a TMR sensor — S101

determining a target angle of the target electrical signal at the first moment according to the first parameter value of the target electrical signal at the first moment and a correspondence between multiple first parameter values of the target electrical signal and multiple angles of the target electrical signal in a single cycle — S102

obtaining a number of signal cycles of the target electrical signal between the first moment and the current moment, and a unit moving distance — S1031

determining the current position of the lens group at the current moment based on the target angle, the number of signal cycles and the unit moving distance — S1032

S103

generating a driving signal based on the current position of the lens group and a target position of the lens group — S104

driving a voice coil motor by using the driving signal such that the lens group is adjusted from the current position to the target position — S105

Fig. 10

Fig. 11

obtaining a target electrical signal generated by a TMR sensor — S201

determining a first parameter value of the target electrical signal at a first moment — S202

determining a target angle of the target electrical signal at the first moment, according to the first parameter value of the target electrical signal at the first moment and a correspondence between multiple angles of the target electrical signal in a single cycle and multiple first parameter values of the target electrical signal — S203

determining a position of the TMR sensor in a single cycle based on the target angle — S204

obtaining the number of signal cycles of the target electrical signal between the first moment and a current moment, and a unit moving distance — S205

determining a current position of a lens group at the current moment based on the position of the TMR sensor in the single cycle, the number of the signal cycles and the unit moving distance — S206

determining a difference value between the current position of the lens group and a target position of the lens group — S207

performing PID calculation according to the difference value between the current position of the lens group and the target position of the lens group to generate a driving signal — S208

driving a voice coil motor by using the driving signal such that the lens group is adjusted from the current position to the target position — S209

Fig. 12

Arctan（sin θ /cos θ ）

sin θ /cos θ

Fig. 13

arctan（x）

π / 2

π / 4

1

x

- π / 2

Fig. 14

ValueB

4/π

AbsB1

θ1

AbsA1

ValueA

(a)

ValueB

4/π

AbsB2

θ2

AbsA2

ValueA

(b)

Fig. 15

obtaining an absolute value AbsA of a voltage value ValueA of a first signal and an absolute value AbsB of a voltage value ValueB of a second signal at the first moment          Sd1

Sd2

AbsA>AbsB

no

yes

Sd3

determining a target storage address N=AbsB/AbsA·Nmax

Sd5

determining the target storage address N=AbsA/AbsB·Nmax

Sd4

determining an arc tangent value ATan=D, according to a target preset value D stored in the target storage address

determining the arctangent value ATan=90·Nmax-D, according to the target preset value D stored in the target storage address

Sd6

determining a target angle according to the arc tangent value ATan and a positive-negative relationship between the voltage value ValueA of the first signal and the voltage value ValueB of the second signal          Sd7

Fig.16

Fig. 17

Fig. 18

Fig. 19

<table>
<tr><td colspan="2">**INTERNATIONAL SEARCH REPORT**</td><td colspan="2">International application No.<br>**PCT/CN2023/082575**</td></tr>
</table>

**A.    CLASSIFICATION OF SUBJECT MATTER**

G02B7/10(2021.01)i;  G02B7/28(2021.01)i;  G02B7/04(2021.01)i;  H04N23/67(2023.01)i

According to International Patent Classification (IPC) or to both national classification and IPC

**B.    FIELDS SEARCHED**

Minimum documentation searched (classification system followed by classification symbols)

IPC: G02B H04N

Documentation searched other than minimum documentation to the extent that such documents are included in the fields searched

Electronic data base consulted during the international search (name of data base and, where practicable, search terms used)

CNTXT, ENTXTC, CNKI: TRM, 隧道磁阻, 镜头, 透镜, 位置, 变倍, 聚焦, 角度, 驱动; WPABS, ENTXT: TRM, tunnel magneto resistance, zoom, focus, position, lens, angle, drive

**C.    DOCUMENTS CONSIDERED TO BE RELEVANT**

| Category* | Citation of document, with indication, where appropriate, of the relevant passages | Relevant to claim No. |
|---|---|---|
| PX | CN 114845023 A (HANGZHOU HIKVISION DIGITAL TECHNOLOGY CO., LTD.) 02 August 2022 (2022-08-02)<br>entire document | 1-15 |
| X | JP 2004037121 A (CANON K. K.) 05 February 2004 (2004-02-05)<br>description, paragraphs 30-86 | 1-6, 8-13 |
| Y | JP 2004037121 A (CANON K. K.) 05 February 2004 (2004-02-05)<br>description, paragraphs 30-86 | 7, 14, 15 |
| Y | CN 108700723 A (ASAHI KASEI MICRODEVICES CORPORATION) 23 October 2018 (2018-10-23)<br>description, paragraph 96 | 7, 14, 15 |
| A | CN 214122671 U (SHENZHEN HOLATEK CO., LTD.) 03 September 2021 (2021-09-03)<br>entire document | 1-15 |
| A | CN 114063172 A (TDK CORPORATION) 18 February 2022 (2022-02-18)<br>entire document | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 July 2023** | **06 July 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/082575**

| Patent document cited in search report | | | Publication date (day/month/year) | Patent family member(s) | | | Publication date (day/month/year) |
|---|---|---|---|---|---|---|---|
| CN | 114845023 | A | 02 August 2022 | None | | | |
| JP | 2004037121 | A | 05 February 2004 | None | | | |
| CN | 108700723 | A | 23 October 2018 | US | 2018292670 | A1 | 11 October 2018 |
| | | | | US | 11042041 | B2 | 22 June 2021 |
| | | | | WO | 2017104774 | A1 | 22 June 2017 |
| | | | | JPWO | 2017104774 | A1 | 09 August 2018 |
| | | | | JP | 6529608 | B2 | 12 June 2019 |
| CN | 214122671 | U | 03 September 2021 | None | | | |
| CN | 114063172 | A | 18 February 2022 | JP | 2022029354 | A | 17 February 2022 |
| | | | | DE | 102021119395 | A1 | 10 February 2022 |
| | | | | US | 2022042826 | A1 | 10 February 2022 |
| | | | | US | 11486734 | B2 | 01 November 2022 |

Form PCT/ISA/210 (patent family annex) (July 2022)

**REFERENCES CITED IN THE DESCRIPTION**

**Patent documents cited in the description**

- CN 202210450222